# EUROPEAN PATENT APPLICATION

(11) **EP 3 188 512 A1**
(43) Date of publication of application: **05.07.2017**
(21) Application number: 16207049.4
(22) Date of filing: 28.12.2016
(51) Int. Cl.: H04R 27/00, H04S 7/00

(54) **AUDIO ROAMING**

(30) Priority: 29.12.2015 EP 15202965
(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: PRINS, Martin, 2564 BL The Hague (NL); STOKKING, Hans Maarten, 2292 CH Wateringen (NL); THOMAS, Emmanuel, 2611 KP Delft (NL); Niamut, Omar Aziz, 3135 PA Vlaardingen (NL)
(74) Representative: Wuyts, Koenraad Maria

(57) **Abstract**

An audio system (100) may comprise:
- a first set of speakers (11-14) arranged in a first area (1),
- a second set of speakers (21-24) arranged in a second area (2),
- an audio source (9) for supplying sound signals to the speakers, and
- at least one detector (81, 82) for detecting the location of a user (U) and for supplying a location signal (PS1, PS2) to the audio source (9).
The first area (1) and the second area (2) may be substantially non-overlapping. The audio source (9) may be configured for controlling the sound signals to the speakers so as to produce a sound field (10; 20) having a position. The audio source (9) may further be configured for adjusting, in response to the at least one location signal (PS1, PS2), the position of the sound field (10; 20) when a user moves from the first area (1) to the second area (2). As a result, the position of the sound field (10) may substantially coincide with the location of the user (U).

## Description

### Field of the Invention

The present invention relates to audio roaming. More in particular, the present invention relates to an audio system and a method of controlling a sound field.

### Background of the Invention

It is well known to use audio systems having an audio source and multiple speakers arranged in an area. Traditional stereo systems have two speakers arranged in a living room or bedroom, for example, while so-called 5.1 systems have five regular speakers and a subwoofer, all arranged in the same room or area.

Stereo systems and 5.1 systems are designed to provide a sound field at or around a certain position. The position of the sound field is determined by the speaker arrangement and by the sound signals fed to the speakers. A sound field position may be defined by its geometrical centre, while the limit of a sound field may be defined by a suitable attenuation (for example -3dB) relative to its centre.

A user location may be defined by the centre (in a horizontal plane) of the user's head. A user has an optimal audio experience only at or around the centre of the sound field, so when the user location substantially coincides with the sound field position. As long as the user is stationary, an optimal user location within the sound field can easily be achieved, but an optimal audio experience is more difficult to achieve when a user moves within the room or area wherein the speaker arrangement is located.

This problem is aggravated when a first set of speakers is arranged in a first area and a second set of speakers is arranged in a second area, which areas are substantially non-overlapping, and when the user moves from one area to the other area. The areas may be defined by distinct rooms in a building, but may also constitute parts of a larger area or room. Each set of speakers may produce a sound field, but as the user moves from one sound field to the other, her audio experience is not optimal.

International patent application WO2013022483 discloses a method and apparatus for audio adjustment which allow audio to be output to a user based on a user's location and orientation. WO2013022483 briefly mentions that user location can be important if multiple rooms in a house have speakers, and the user walks around to different rooms in the house. However, WO2013022483 does not mention or suggest if and how the user location is used in that case. More in particular, there is no suggestion how to provide the user with an optimal audio experience while walking around in the house.

### Summary of the Invention

It is an object of the present invention to solve this problem by providing an audio system, comprising:
- a first set of speakers arranged in a first area,
- a second set of speakers arranged in a second area,
- an audio source for supplying sound signals to the speakers,
- at least one detector for detecting a user location and for supplying a respective user location signal to the audio source,
wherein the first area and the second area are substantially non-overlapping, wherein the audio source is configured for controlling the sound signals to the first set of speakers and to the second set of speakers so as to produce a sound field having a position, and wherein the audio source is further configured for adjusting, in response to the at least one location signal, the position of the sound field when a user moves from the first area to the second area, so as to substantially coincide with the user location.

By providing an audio source which is configured for controlling the sound signals so as to provide a sound field having a position, and adjusting the position of the sound field in response to the at least one location signal indicative of the user's location, it becomes possible for the sound field to move with the user, so that the user can remain at an optimal positon within the sound field, also when moving. As a result, the user's audio perception can remain substantially constant.

One or more detectors may be provided to provide location signals indicative of a user location. A detector may utilize radar technology and/or infra-red technology to determine the user location by determining the distance of the user from two or more detectors. Advantageously, one or more speakers may comprise one or more detectors. One or more detectors may alternatively, or additionally, be carried by the user, for example detectors accommodated in a mobile of portable device carried by the user, or detectors accommodated in the users clothing. The detectors may be wirelessly connected with the audio source, for example using Bluetooth® technology.

The audio system of the invention can be optimised for a single user. However, the audio system may also be used for multiple users. In that case, the location information may be averaged, for example, to produce an average location for a group of users (that is, a group of two or more users), and the audio system may adjust the sound field position so as to substantially coincide with the group location, that is, the average location of the users of the group. In some embodiments, the audio system may be configured for ignoring the location of outliers so as to keep the group location near the locations of most members of a group. In other embodiments, the audio system may be configured for splitting groups into new groups in order to optimise the audio experience of the members of the groups.

In an embodiment, the audio system may comprise a vector based amplitude panning unit configured for adjusting the position of the sound field. Such a panning unit may be part of the audio source, or may be constituted by a separate unit. Vector based amplitude panning (VBAP) is a technique known *per se* which can advantageously be used to direct sound, and thus to adjust the position of a sound field produced by a set of speakers.

In an embodiment, the audio system comprises spatial domain filters configured for adjusting the position of the sound field. Such filters may be part of the audio source, or may be constituted by a separate unit. Spatial domain filtering is a technique known *per se* which is suitable for directing sound, and thus for adjusting the position of a sound field produced by a set of speakers. Spatial domain filtering is particularly useful in audio systems using Ambisonics techniques (see https://en.wikipedia.org/wiki/Ambisonics). The Ambisonics techniques were first disclosed in a paper by Michael A. Gerzon, Periphony: With-Height Sound Reproduction. Journal of the Audio Engineering Society, 1973, 21(1):2-10. A more recent paper is by Malham, D.G.: 'Higher order Ambisonic systems for the spatialisation of sound', Proceedings, ICMC99, Beijing, October 1999.

To properly position a sound field, at least two speakers per area may be used, but it is preferred that in the audio system each set of speakers comprises at least three speakers, and more preferably at least four speakers. In some embodiments, each set of speakers may comprise more than ten speakers, for example twenty-four speakers. In other embodiments, one of the sets of speakers may comprise two or more speakers, while the other set may be constituted by a single speaker only. That is, one of the sets of speakers may consist of a single speaker only. It is noted that more than two areas and hence more than two sets of speakers may be used in the present invention.

The detector or detectors used to produce one or more location signals may be stationary, such as detectors mounted in the areas, for example on the floor or on the speakers. However, it is also possible to use mobile detectors. In an embodiment, therefore, the audio system further comprises at least one detector carried by the user. Mobile detectors may be comprised in a portable device carried by a user, such as a smartphone, a tablet device or a smartwatch (such as the Apple Watch). However, mobile detectors may alternatively, or additionally, be comprised in the user's clothing, for example in a coat or sweater.

In the embodiments discussed above, the sound field is adjusted with regard to its position, for example to let the user experience a constant sound level (sound volume). However, the invention is not so limited and may also involve adjusting the sound field with regard to orientation. That is, the orientation of the user (in particular the direction the user is facing) may additionally be taken into account when adjusting the sound field. Accordingly, in an embodiment the at least one detector is configured for detecting the orientation of the user and for supplying an orientation signal to the audio source, the audio source is also configured for adjusting the sound signals so as to provide a sound field having an orientation, and the audio source is configured for adjusting the sound signals when the user's orientation changes.

That is, the audio system may be configured for taking both the user's location and the user's orientation into account. The detector(s) for determining user orientation may be the same as the detector(s) for determining user location, or may be additional detectors. Location detectors and orientation detectors may include cameras, which for orientation detection may be coupled with face recognition software, for example, to detect the direction of the user's face and hence the orientation of her ears.

The invention also provides a method of controlling a sound field in a first area and a second area in which a user having a user location may be located, which areas are substantially non-overlapping, the method comprising:
- producing a sound field having a sound field position,
- repeatedly determining the user location, and
- adjusting, in response to the determined user location, the sound field position when a user moves from the first area to the second area, such that the sound field position substantially coincides with the user location.
The method of the invention may further comprise checking whether the user (or group of users) still is located within the areas.

Adjusting the sound field may be carried out using vector based amplitude panning (VBAP), spatial domain filtering (SDF), a combination of these techniques, and/or any other suitable technique.

The invention further provides a computer program product comprising instructions which allow a processor to carry out the steps of the method described above. The software program product may be stored on a tangible carrier, such as a DVD or a USB stick. Alternatively, or additionally, the software program product may be stored on a server from which it may be downloaded using the Internet. The software program product contains software instructions which can be carried out by the processor of a device, such as a server, a user device (for example a smartphone), and/or a monitoring device.

It is noted that the invention relates to all possible combinations of features recited in the claims.

### Brief description of the drawings

The present invention will further be explained with reference to exemplary embodiments illustrated in the drawings, in which:
Fig. 1A schematically shows an audio system of the present invention arranged in two adjacent areas.
Fig. 1B schematically shows the audio system of Fig. 1A in which the user moves from one area to the other area.
Fig. 1C schematically shows an audio system of the present invention arranged in two non-adjacent areas.
Fig. 2 schematically shows the use of an audio system of the present invention arranged in two non-adjacent and non-aligned areas.
Fig. 3 schematically shows a first embodiment of an audio system of the present invention in more detail.
Fig. 4 schematically shows a second embodiment of an audio system of the present invention in more detail.
Fig. 5 schematically shows an exemplary embodiment of a method according to the present invention.
Fig. 6 is a schematic block diagram of a general system to be employed in the disclosed method.
Fig. 7 schematically shows a software program product according to the present invention.

### Detailed description of embodiments

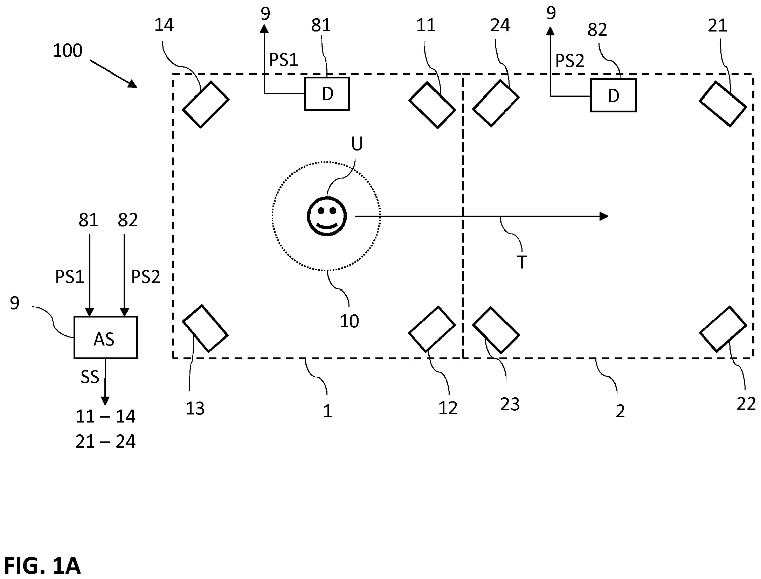

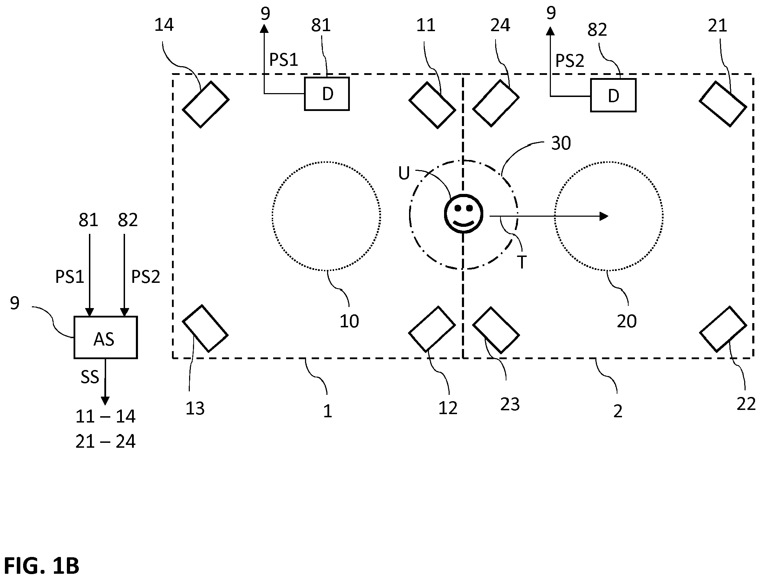

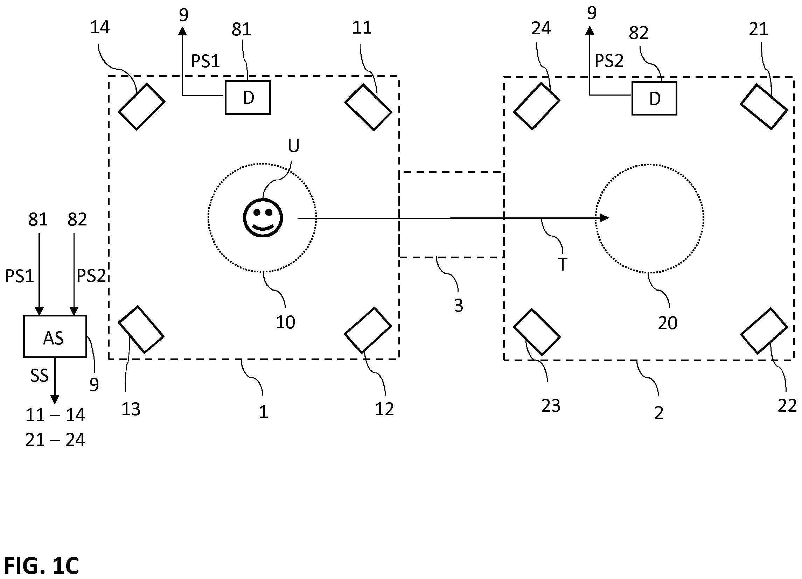

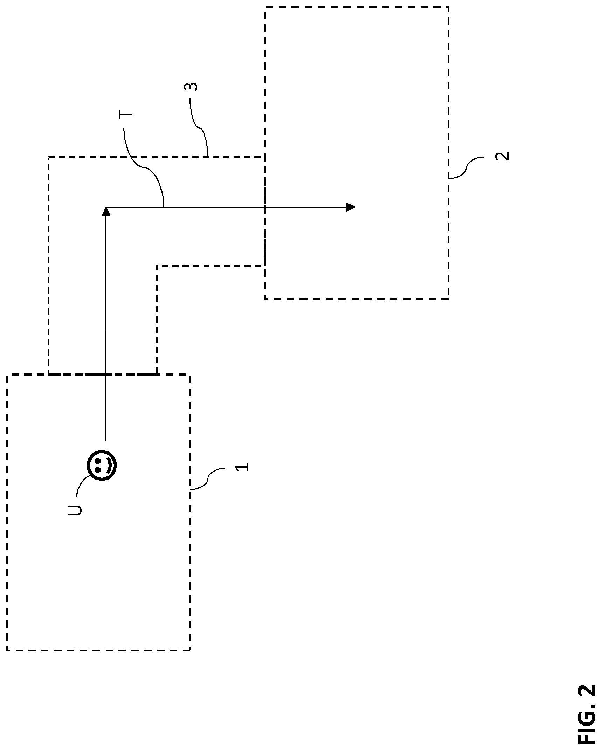

The present invention allows a sound field to be adjusted in dependence on the location of a user, the sound field being produced by at least two sets of loudspeakers arranged in different, preferably non-overlapping areas. In accordance with the invention, the sound field substantially moves with the user as the user leaves one area and enters the other area. The areas may be adjacent, as illustrated in Figs. 1A and 1B, or non-adjacent, as illustrated in Figs. 1C and 2.

The invention is first illustrated by way of a non-limiting example illustrated in Fig. 1A. A first area 1 contains in the present example an arrangement of four speakers 11 - 14. The first area 1 and/or the second area 2 may be a room in a building, such as a house, an office building or an airport terminal, may be part of a room, or an area in the open air. In the example shown, the speakers 11-14 are arranged in the corners of the first area 1, but other speaker positions, such as along the sides of the first area 1, are also possible. Also, more or less than four speakers may be used for the areas 1 and 2, such as three, five, six, ten or twenty speakers per area. Although the areas 1 and 2 are shown as squares, the areas may have any suitable shape, such as rectangular (see Fig. 2), round, elliptical, hexagonal, or irregularly shaped. It is noted that the areas 1 and 2 may differ in shape, number of speakers, and speaker positions.

The second area 2 contains four speakers 21-22, which in the present example are also arranged in the corners of the area, but could also be arranged in other positions.

Each area may contain at least one detector. In the example shown, a first detector (D) 81 is arranged in the first area 1 while a second detector (D) 82 is arranged in the second area 2. The detectors 81 and 82 produce location signals PS1 and PS2 respectively, which are supplied to the audio source (AS) 9. This audio source 9, which may be located inside or outside one of the areas, is configured for both producing and adjusting sound signals (SS), which are fed to the speakers 11-14 and 21-24. In the present example, eight sound signals (SS) are produced by the audio source 9, which sound signals are typically distinct. That is, the audio source typically produces a separate sound signal (SS) for each speaker.

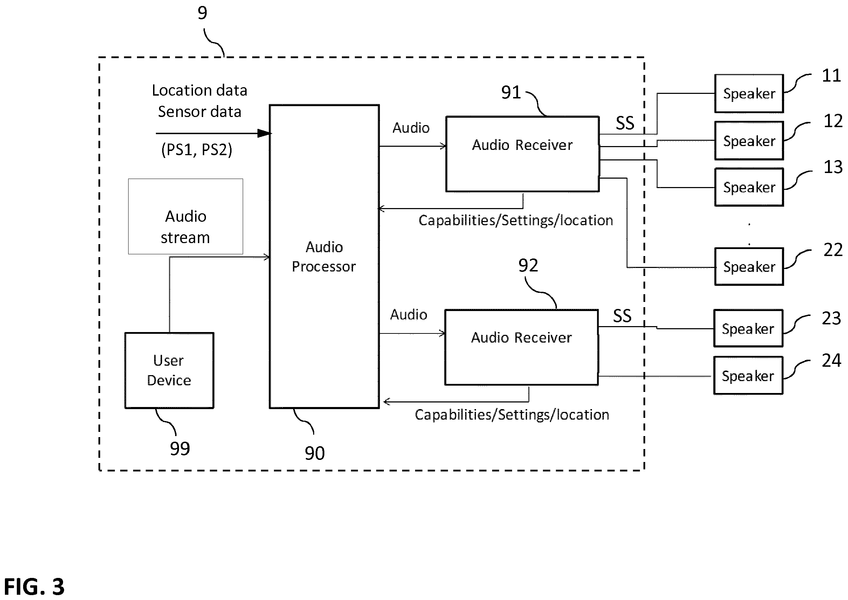

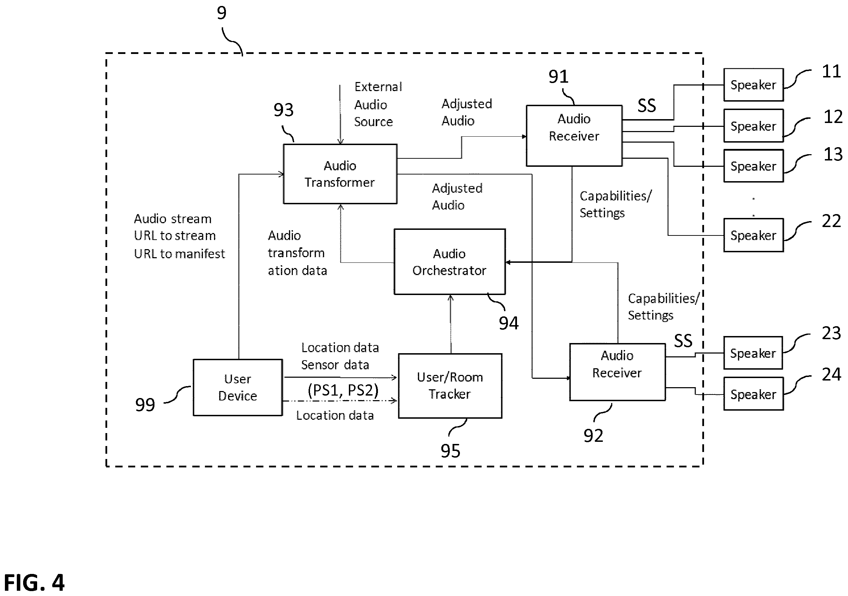

Although the audio source 9 is shown in Figs. 1A - C as a single unit, it may be constituted by several units, as will later be explained in more detail with reference to Figs. 3 and 4. In an embodiment, the audio source 9 may for example comprise, two or more parallel audio sources and a common controller, or two parallel audio receivers and a common audio processor as illustrated in Fig. 3. In some embodiments, the audio source 9 may comprise a smartphone or similar device.

The audio source 9 may receive a sound recording from an external source, or may have an internal sound recordings source, such as a memory in which sound recordings are digitally stored in a suitable format. An external source may be the internet, or a smartphone or computer on which sound recordings are stored.

In an embodiment, the audio source (AS) 9 may comprise one or more sound processing units for adjusting the sound signals so as to position the sound field to match the user location, and optionally also to adjust the orientation of the sound field to match the user orientation. The sound processing unit(s) may comprise a vector based amplitude panning (VBAP) unit, and/or a spatial domain filtering (SDF) unit. In the case of spatial domain filtering, filtering operations may comprise:
∘ rotation: rotate the sound field about the x, y, or z axis;
o mirror: reflect the sound field across the x, y, or z axis;
o directivity: adjust the directivity of the sound field across the origin;
o dominance: adjust the directional gain of the sound field;
o focus: focus on a region of a sound field;
o push: push a sound field in a specific direction.
It is noted that the directivity of a sound field is a measure of the dominant direction of the audio within a sound field. Using a so-called directivity filter, at least part of the dominant direction can be attenuated, thereby adjusting the directivity. It is further noted that adjusting the directivity across the origin implies adapting the amplification of the audio relative to the centre of the sound field.

When roaming from one location (area) to another location (area), intermediate and/or ad-hoc speaker setups may be created to render the output sound field. The speaker setups may differ substantially from the speakers setups in the different rooms. Therefore, the audio adjustment may consists of changing the sound field decoding operation, as well as compensating for non-ideal speaker setup properties.

An intermediate speaker set-up may comprise at least one (and possibly all) of the speakers of a first set of speakers, and at least one (and possibly all) of the speakers of a second set of speakers. An intermediate speaker set-up may be temporary when a user moves from one area to another, or semi-permanent when a user stays in-between two areas for an extended amount of time.

An ad-hoc speaker set-up may comprise speakers which are not permanently physically present. The speaker of a smartphone carried by the user, for example, may be used as an ad-hoc speaker and be part of an ad-hoc speaker set-up. In such an embodiment, a smartphone or similar device may have multiple functions and be used as an ad-hoc speaker and may additionally be used as at least one of an audio source 9, a user device 99 and a location detector.

In case a channel-based format is used to represent the input sound field, channel up/down conversion may be required to arrive at an output sound field with a number of channels equal to the number of loudspeakers available in the given, ad-hoc speaker setup. Such up/down conversion is known in the state-of-the art of channel-based surround formats.

In case Ambisonics (or Higher Order Ambisonics) is used to represent the input sound field, the Ambisonics-encoded signals carry the directional information of an entire sound field. That means, that they are completely independent from the loudspeaker layout chosen for decoding the sound field. The adjustment operation therefore includes the derivation of a suitable Ambisonics decoder that is designed for the given, ad-hoc, speaker layout, ensuring that the minimum number of available loudspeakers in the speaker setup is higher than or equal to the number of Ambisonics channels.

In addition to channel conversion and sound field decoding, the audio adjustment may consist of speaker setup compensation, by determining and selecting appropriate values for speaker crossover frequencies, inter-speaker distances, speaker reproduction levels and speaker setup equalization. Such adjustments are known in the state-of-the-art for fixed speaker setups, and typically require an a-priori calibration phase.

In an embodiment that will be further explained below, a media orchestration system may be employed; here, the server-side architecture contains a controller (Audio Orchestrator) and media processor (Audio Transformer), which can associate location information from the user device via the User Tracker, and location information from the physically present speakers via the Room Tracker, in a media orchestration session. The media processor may analyse incoming location information, in particular information from the user device, and suggest audio adjustment guidelines to the controller. From these guidelines, the controller may derive orchestration stream data and send them to audio renderers (Audio Receivers) in the form of media orchestration streams. Such orchestration data may take the form of proposed signal transformations and speaker setup compensation parameters, and more.

Returning to Fig. 1A, a user U is initially located in the first area 1, where the speakers 11-14 produce a default sound field 10 centred in the area. As the user U is also centred in the area 1, the user's audio experience is optimal (for the sake of the present explanation, the orientation of the user is not taken into consideration). It is assumed that the speakers 21-24 in the second area 2 initially produce no sound.

However, as the user U moves towards the second area 2 along a trajectory T, as also illustrated in Fig. 1B, her audio experience will no longer be optimal as she is located between the sound field 10 of the first set of speakers and the (potential) sound field 20 of the second set of speakers. Simply switching on the second set of speakers at the same volume as the first set will generate a second sound field 20, which in the present example is centred in the second area 2. This will still result in a sub-optimal sound experience.

Instead, the present invention produces a third sound field 30 which is preferably centred around the user U, thus providing the user with an optimal audio experience (it is noted that in some embodiments, the third sound field 30 is not only centred around the user, but also aligned with the user U, that is, the orientation of the sound field 30 preferably matches the orientation of the user). Thus, instead of producing the first sound field 10 and the second sound field 20, the audio system 100 of the invention produces a third sound field 30, produced by two sets of speakers and having a position which substantially coincides with the user location.

It is noted that in the present example the sound field is assumed to be circular, and that the sound field position corresponds with the centre of the circular sound field. In practice, a sound field is often not circular, and its position may be defined by its geometrical centre, while the limit of the sound field may be defined by a suitable attenuation (for example -3dB) relative to its centre. It is further noted that the user location may be defined by the centre (in a horizontal plane) of the user's head.

The third sound field 30 can be produced by adjusting the sound signals (SS) supplied to the speakers 11-14 and 21-24 in such a way, that the sound field gradually moves: from the position of the initial first sound field 10, substantially along the trajectory T, to the position of the third sound field 30. This gradual movement of the sound field may involve, for example, gradually increasing the sound levels of speakers 13 and 14 (rear) which were already in use, while also gradually increasing the sound levels of speakers 21 and 22 (front) which were not yet in use. Suitable panning or spatial filtering operations are known to achieve this.

When the user U continues her journey along trajectory T, she may eventually arrive at the centre of the second sound field 20, which may be produced using only speakers 21-24 , the first set of speakers being silent.

The example of Fig. 1C shows a similar arrangement, in which the first area 1 and the second area 2 are not adjacent, but are separated by an intermediate area 3 (such as a corridor) which contains no speakers. However, the application of the invention remains substantially unchanged.

While the intermediate area 3 of Fig. 1C is straight, the intermediate area 3 of Fig. 2 has a right angle. Still, the present invention can be utilized, but compensation for the non-ideal speaker setup properties and intermediate area characteristics may be necessary. That is, the audio adjustment may comprise speaker setup compensation, by determining and selecting appropriate values for speaker crossover frequencies, inter-speaker distances, speaker reproduction levels and speaker setup equalization. Such adjustments are known *per se* in the prior art for fixed speaker setups, and typically require a prior calibration phase.

Specifically, audio adjustment may comprise a process where, in real time, an acoustic profile is computed for the intermediate area. Similarly, the position and characteristics of the speakers in any intermediate and/or ad-hoc speaker setup are determined. These processing steps may require that the speakers and/or any portable user device are equipped with calibration microphones. Also, this may require the insertion of specific calibration test signals in the audio source. The user location information can also be used in the calibration process. When the user roams from a first room or area through multiple intermediate areas towards another room or area, both the room profile and speaker setup characteristics are updated. The audio adjustment may additionally comprise a series of audio equalization and filtering processing steps, to correct in real time the rendering of the sound field using any temporary speaker setup arranged for calibration purposes in the one or more intermediate areas.

A first embodiment of the audio source 9 of Figs. 1A - 1C is shown in more detail in Fig. 3. The audio source 9 of Fig. 3 comprises an audio processor 90, a first audio receiver 91, a second audio receiver 92, and a user device 99. The user device 99 may be a portable device, such as a smartphone, a laptop computer, a portable CD player, or any other device capable of producing audio data, such as an audio stream. The user device 99 may, in some embodiments, be connectable with an external source of audio data, such as the internet, so as to facilitate downloading and/or internet audio streaming. In some embodiments, the user device (such as a smartphone) may be used to control an external source of audio data, while in other embodiments the user device constitutes the source of audio data. In still other embodiments, the user device may both be the controller of an external source and itself constitute a source of audio data.

The user device 99 may also be configured for providing user location data, for example using GPS (Global Positioning System) or another positioning system. The user device 99 may alternatively, or additionally, be configured for providing sensor data, such as data indicative of the user's orientation, for example of the user device comprises smart glasses or another wearable user device. It is noted that in some embodiments, the user device is not part of the audio source 9. In those embodiments, the audio source 9 comprises a source unit which is configured for supplying audio data, for example an audio stream.

It is further noted that any user location data and user orientation data may be used in addition to, or instead of, the location data (location signals LS1 and LS2 of Figs. 1A - C) produced by the detectors (81 and 82 in Figs. 1A - C).

The audio data (such as an audio stream or an audio signal) provided by the user device 99 are fed to the audio processor 90 where the data are suitably processed. The audio output of the audio processor 90 which is fed to the audio receivers 91 and 92 is adapted to reflect the user location, and preferably also the user orientation. The audio receivers 91 and 92 can provide the audio processor 90 with information regarding the capabilities, the settings and/or the locations of the speakers (of which speakers 11 - 13 and 22 - 24 are shown in Fig. 3), which information the audio processor 90 uses to adapt the audio data fed to the audio receivers. The speakers sets receive sound signals SS from the audio receivers 91 and 92 respectively.

It will be understood that the number of audio receivers and speakers shown in only by way of example and that other numbers are possible, such as three, four or five audio receivers, and/or two, three, five or eight speakers per set.

A second embodiment of the audio source 9 is schematically illustrated in Fig. 4. The embodiment of Fig. 4 also comprises a first audio receiver 91 and a second audio receiver 92 coupled with speaker sets 11 - 14 and 21 - 24 (see Figs. 1A - C) respectively. The embodiment of Fig. 4 also comprises a user device 99, which may be similar to the user device of Fig. 3. The audio processor 90 of Fig. 3 is in the embodiment of Fig. 4 constituted by an audio transformer 93, an audio orchestrator 94 and a user/room tracker 95.

The audio transformer 93 is configured for transforming the audio data under control of audio transformation data provided by the audio orchestrator 94, and for outputting adjusted audio data to the audio receivers 91 and 92. The audio transformer 93 may use conventional audio positioning techniques for this purpose.

The user/room tracker tracks the user and may also track the physical layout of the room or area where the user is located. Tracking may be active, the user device 99 actively transmitting location data and/or sensor data to the user/room tracker 95, and/or passive, the location of the user device being tracked using, for example, a webcam or detectors (such as the detectors 81 and 82 in Figs. 1A - C) which may use infrared detection (such as the Microsoft Kinect® technology). The user/room tracker 95 may additionally be configured for establishing the positions and capabilities of the speakers in the rooms or areas, for example at regular intervals, or at (initial) start-up, or in a set-up mode.

The audio orchestrator 94 is configured for determining the audio transformation (or audio transformations) which provides an optimal audio rendering considering the capabilities of the audio receivers, the speaker topologies and the user location. For this purpose, the audio orchestrator may additionally have access to the audio data, or to metadata of the audio data.

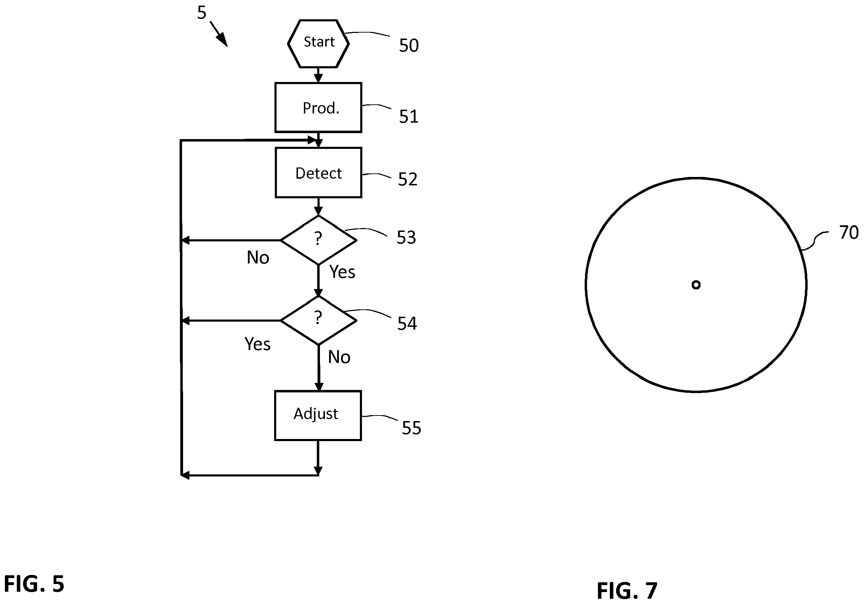

An exemplary embodiment of a method according to the invention is schematically illustrated in Fig. 5. The method 5 shown in Fig. 5 may start with an initial step 50. Then, a sound field is produced in the first step 51. In a second step 52, which is shown in Fig. 5 to occur after the first step 51 but may occur substantially simultaneously, or slightly before the first step (while still being representative of the actual user location), the user location is detected. In step 53 it is determined whether the user location is within the areas (in the examples of the previous figures, the areas 1, 2 and 3). If this is not the case ("No", that is, if the user is not detected in these areas), the method may return to step 52 where the user location is detected again. If the user location is within the areas ("Yes"), then the method may continue with step 54, in which it is checked whether the user location substantially coincides with the sound field position, as determined by the parameters of the sound signals (SS in Figs. 1-3). If this is the case ("Yes"), then the method may return to step 52. If this is not the case ("No"), then the method continues with step 55, in which the (parameters of the) sound signals are adjusted, so that the sound field position substantially coincides with the user location. Adjusting the sound field (position and/or orientation) may be carried out using, for example, vector based amplitude panning (VBAP), spatial domain filtering (SDF), a combination of these techniques, or any other suitable technique.

As will be appreciated by those skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit", "module" or "system". Functions described in this document may be implemented as an algorithm executed by a microprocessor of a computer. Furthermore, aspects of the present invention may take the form of a computer program product embodied in one or more computer readable medium(s) having computer readable program code embodied, for example, stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fibre, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

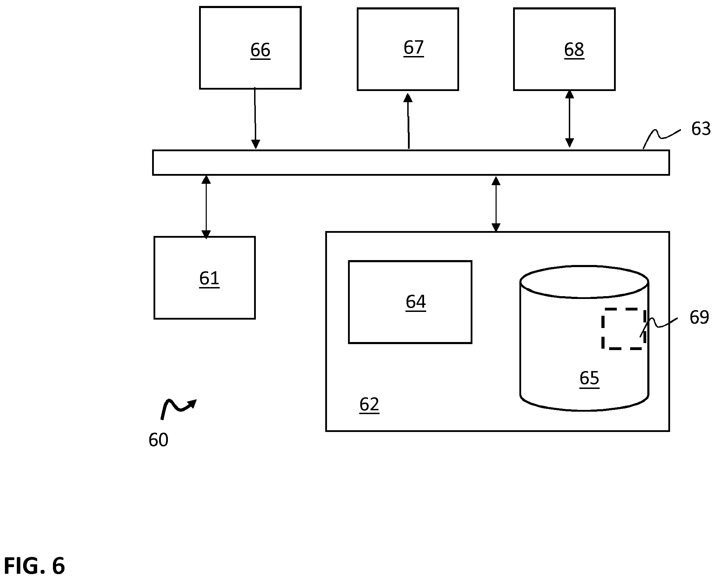

FIG. 6 is a block diagram illustrating an exemplary data processing system that may be used as a part of an audio system or a detector unit, for example.

Data processing system 60 may include at least one processor 61 coupled to memory elements 62 through a system bus 63. As such, the data processing system 60 may store program code within memory elements 62. Further, processor 61 may execute the program code accessed from memory elements 62 via system bus 63. In one aspect, data processing system 60 may be implemented as a computer that is suitable for storing and/or executing program code. It should be appreciated, however, that data processing system 60 may be implemented in the form of any system including a processor and memory that is capable of performing the functions described in this specification.

Memory elements 62 may include one or more physical memory devices such as, for example, local memory 64 and one or more bulk storage devices 65. Local memory may refer to random access memory or other non-persistent memory device(s) generally used during actual execution of the program code. A bulk storage device 65 may be implemented as a hard drive or other persistent data storage device. The data processing system 60 may also include one or more cache memories (not shown) that provide temporary storage of at least some program code in order to reduce the number of times program code must be retrieved from bulk storage device 65 during execution.

Input/output (I/O) devices depicted as input device 66 and output device 67 optionally can be coupled to the data processing system 60. Examples of input devices may include, but are not limited to, for example, a keyboard, a pointing device such as a mouse, a touchscreen, or the like. Examples of output device may include, but are not limited to, for example, a monitor or display, speakers, or the like. Input device 66 and/or output device 67 may be coupled to data processing system 60 either directly or through intervening I/O controllers. A network adapter 68 may also be coupled to data processing system 60 to enable it to become coupled to other systems, computer systems, remote network devices, and/or remote storage devices through intervening private or public networks. The network adapter 68 may comprise a data receiver for receiving data that is transmitted by said systems, devices and/or networks to said data processing system 60 and a data transmitter for transmitting data to said systems, devices and/or networks. Modems, cable modems, and Ethernet cards are examples of different types of network adapters that may be used with data processing system 60.

As pictured in FIG. 6, memory elements 62 may store an application 69. It should be appreciated that data processing system 60 may further execute an operating system (not shown) that can facilitate execution of the application. Applications implemented in the form of executable program code can be executed by data processing system 60, for example, by processor 61. Responsive to executing the application 69, the data processing system 60 may be configured to perform one or more operation as disclosed in the present application in further detail.

In one aspect, for example, data processing system 60 may represent an audio source 9 or a user device 99. In that case, application 69 may represent a client application that, when executed, configures data processing system 60 to perform the various functions described herein with reference to an audio source or a user device. The user device may include, but is not limited to, a personal computer, a portable computer, a cellular phone (such as a smartphone), or similar apparatus.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The abstract should not be used to limit the scope of the claims, and neither should reference numbers in the claims.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiments were chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (for example, read-only memory devices within a computer such as CD-ROM disks readable by a CD-ROM drive, ROM chips or any type of solid-state non-volatile semiconductor memory) on which information is permanently stored; and (ii) writable storage media (for example, flash memory, floppy disks within a diskette drive or hard-disk drive or any type of solid-state random-access semiconductor memory) on which alterable information is stored. A non-limiting example of a computer program product 70 is schematically illustrated in Fig. 7.

It will therefore be understood by those skilled in the art that the present invention is not limited to the embodiments mentioned above and that many additions and modifications are possible without departing from the scope of the invention as defined in the appending claims.

## Claims

1. An audio system (100), comprising:
- a first set of speakers (11-14) arranged in a first area (1),
- a second set of speakers (21-24) arranged in a second area (2),
- an audio source (9) for supplying sound signals (SS) to the speakers,
- at least one detector (81, 82) for detecting a user location and for supplying a respective user location signal (PS1, PS2) to the audio source,
wherein the first area (1) and the second area (2) are substantially non-overlapping,
wherein the audio source (9) is configured for controlling the sound signals to the first set of speakers (11-14) and to the second set of speakers (21-24) so as to produce a sound field (10; 20) having a position, and
wherein the audio source (9) is further configured for adjusting, in response to the at least one location signal (PS1, PS2), the position of the sound field when a user moves from the first area to the second area, so as to substantially coincide with the user location during movement from the first area to the second area.

2. The audio system according to claim 1, wherein the audio source (9) comprises a vector based amplitude panning unit configured for adjusting the position of the sound field.

3. The audio system according to claim 1 or 2, wherein the audio source (9) comprises spatial domain filters configured for adjusting the position of the sound field.

4. The audio system according to any of the preceding claims, wherein each set of speakers comprises at least three speakers, preferably at least four speakers (11-14; 21-24).

5. The audio system according to any of the preceding claims, wherein the at least one detector comprises at least one detector carried by the user (U).

6. The audio system according to any of the preceding claims, further comprising at least one user device (99) carried by the user (U), which user device is preferably configured for providing location data.

7. The audio system according to any of the preceding claims,
wherein the at least one detector (81, 82) is also configured for detecting the orientation of the user (U) and for supplying an orientation signal to the audio source (9),
wherein the audio source (9) is configured for adjusting the sound signals (SS) so as to provide a sound field (10; 20) having an orientation, and
wherein the audio source (9) is configured for adjusting the sound signals (SS) when the user's orientation changes.

8. A method of controlling a sound field (10, 20, 30) in a first area (1) and a second area (2) in which a user (U) having a user location may be located, which areas are substantially non-overlapping,
the method comprising:
- producing a sound field (10) having a sound field position,
- repeatedly determining the user location, and
- adjusting, in response to the determined user location, the sound field position when a user moves from the first area (1) to the second area (2), such that the sound field position substantially coincides with the user location during movement from the first area to the second area.

9. The method according to claim 8, wherein the adjusting comprises vector based amplitude panning.

10. The method according to claim 8 or 9, wherein the adjusting comprises spatial domain filtering.

11. A computer program product (70) comprising instructions which allow a processor to carry out the steps of the method according to any of claims 8 to 10.
